# EUROPÄISCHE PATENTSCHRIFT

(11) **EP 2 929 651 B1**
(45) Veröffentlichungstag und Bekanntmachung des Hinweises auf die Patenterteilung: **03.07.2019**
(21) Anmeldenummer: 13782693.9
(22) Anmeldetag: 23.10.2013
(51) Int. Cl.: H04L 12/12, H04L 12/40, H04W 52/02

(54) **VERFAHREN ZUR REDUKTION DER ENERGIEAUFNAHME IN NETZWERKEN**
METHOD FOR REDUCING THE ENERGY CONSUMPTION IN NETWORKS
PROCÉDÉ DE RÉDUCTION DE L'ABSORPTION D'ÉNERGIE DANS DES RÉSEAUX

(30) Priorität: 10.12.2012 DE 102012222642
(43) Veröffentlichungstag der Anmeldung: 14.10.2015
(73) Patentinhaber: Robert Bosch GmbH, 70442 Stuttgart (DE)
(72) Erfinder: BLASCHKE, Volker, 71642 Ludwigsburg (DE); LOTHSPEICH, Timo, 70839 Gerlingen (DE); MUELLER, Andreas, 71336 Waiblingen (DE)
(86) Internationale Anmeldenummer: PCT/EP2013/072127
(87) Internationale Veröffentlichungsnummer: WO 2014/090469

(56) Entgegenhaltungen:
- US-A1- 2006 045 035
- US-A1- 2006 072 614

## Beschreibung

Die vorliegende Erfindung betrifft ein Verfahren für einen energieeffizienten Betrieb eines Netzwerkelements, ein Netzwerkelement, das ein solches Verfahren ausführt, ein Netzwerk, das ein derartiges Netzwerkelement umfasst, ein Computerprogramm, das ein solches Verfahren implementiert und ein computerlesbares Medium, auf dem ein derartiges Computerprogramm gespeichert ist.

### Stand der Technik

Daten, die in einem paketorientierten Kommunikationssystem ausgetauscht werden, werden üblicherweise als Datenpakete (auch Nachrichten genannt) gebündelt und als eine Einheit versandt. Dabei enthalten die Nachrichten nicht nur Nutzdaten, sondern auch weitere Informationen (Metadaten), mit denen unterschiedliche Kontrollinformationen übermittelt werden, die für die Steuerung des Informationsaustauschs notwendig sind. Beispiele für solche Daten sind die Sender-/Empfängeradresse oder eine Prüfsumme. Üblicherweise werden diese Metadaten in einen sogenannten Header und/oder Trailer zusammengefasst und den Nutzdaten vorangestellt bzw. ihnen hinten angefügt. Ein sehr bekanntes Beispiel für die paketorientierte Übertragung ist das Internetprotokoll, das heute als eines der Standardprotokolle für die Vernetzung von Systemen eingesetzt wird.

In einem Kommunikationssystem, das hinsichtlich seines Energiebedarfs nicht optimiert ist, kann ein Netzwerkelement zumeist wechselweise jeweils einen von drei Kommunikationsmodi einnehmen, nämlich einen (Daten-)Sendemodus, einen (Daten-)Empfangsmodus oder einen Bereitschaftsmodus (sogenannter "Idle-Listening-Modus"), in dem das Netzwerkelement sendebereit ist und gleichzeitig den Kanal auf einkommende Nachrichten prüft. Solange weder Daten empfangen noch gesendet werden, verbleibt das Netzwerkelement im Bereitschaftsmodus, in dem sein Energiebedarf zumeist ähnlich groß ist wie im Empfangsmodus, weil in beiden Modi dieselben benötigten Funktionsblöcke aktiv sind.

Zur Energieeinsparung eignet sich daher eine Modifikation der Phase, in der keine Daten vom Netzwerkelement versandt oder empfangen werden. In diesem Sinne werden beispielsweise in der DE 198 60 868 A1 verschiedene Betriebszustände für Endgeräte definiert. Neben einer Bereitschaftsphase und einer sogenannten Aktivphase, in der ein Endgerät ein Datenpaket empfängt oder versendet, wird in der genannten Druckschrift eine sogenannte "Schlafphase" offenbart, in der noch mehr Systemkomponenten abgeschaltet sind als in der Bereitschaftsphase.

In einem derartigen oder ähnlichen Ruhemodus befindet sich ein Netzwerkelement in einem Zustand, in dem lediglich ein reduzierter Funktionsumfang des Netzwerkelements verfügbar ist; beispielsweise können komplexe und damit energieintensive Funktionen wie das Senden und/oder das Empfangen von Daten deaktiviert sein. Die grundlegende Idee dabei ist, dass das Netzwerkelement zeitweise den energiearmen Ruhemodus anstelle des energieintensiveren Bereitschaftsmodus einnimmt. Die Zeit, in der sich ein Netzwerkelement in Ruhemodus befindet, wird im Folgenden als Ruhephase bezeichnet.

Die Steuerung von Zeitpunkt und Dauer der Ruhephase wird idealerweise z. B. von einem MAC-Protokoll (Ausprägung der Schicht 2 des ISO/OSI Referenzmodells) geleistet. Zur Steuerung gibt es unterschiedlichste Ausprägungen, wie beispielsweise S-MAC oder TRAMA. Diese lassen sich im Wesentlichen in Systeme mit potentiellen Kollisionen beim Kanalzugang (bspw. S-MAC) und in TDMAbasierte Systeme (also Systeme ohne potentielle Kollisionen beim Kanalzugang, bspw. TRAMA) unterscheiden. Zudem gibt es Systeme, die in bestimmten Phasen eine Kollision zulassen und in anderen Phasen eine Kollision ausschließen, also eine Kombination von kollisionsfreien und kollisionsbehafteten Phasen darstellen.

Für die unterschiedlichen Systeme gibt es verschiedene Ansätze zur Steuerung des Nachrichtenaustauschs im Netzwerk und des Übergangs der Netzwerkelemente in die jeweiligen Modi. Diese bekannten Vorgehensweisen haben jedoch verschiedene Nachteile. Je nach gewählter Lösung werden beispielsweise Energiekosten lediglich vom empfangenden auf ein sendendes Netzwerkelement verschoben, im Falle von Kollisionen kann zusätzlicher Energiebedarf generiert werden, oder die Synchronisation von Zeitbasen und/oder Sendeplänen kann aufwendig werden und/oder das Netzwerk zusätzlich beanspruchen. Eine große Anzahl an Netzwerkelementen im Kommunikationssystem und/oder an auszutauschenden Nachrichten kann die negativen Auswirkungen dabei noch verstärken.

Aus der US 2006/0072614 A1 ist bspw. ein Kommunikationssystem bekannt, bei dem ein Netzwerkelement nach Empfang des Anfangs einer Nachricht in einen Ruhemodus wechselt, sofern das Netzwerkelement erkennt, dass die Nachricht nicht für dieses Netzwerkelement bestimmt ist. Die Dauer des Ruhemodus orientiert sich im Wesentlichen an der Nachrichtenlänge.

Ein ähnliches Kommunikationssystem ist auch aus der US 2006/0045035 A1 bekannt. Auch dort wird die Dauer des Ruhemodus anhand der Länge der Nachricht ermittelt.

Aufgabe der Erfindung ist es daher, den Energieverbrauch von Kommunikationssystemen bei gleichzeitiger Minimierung von zusätzlicher Nachrichtenlatenz und Komplexität der Steuerung und Kontrolle zu reduzieren.

### Offenbarung der Erfindung

Erfindungsgemäß werden ein Verfahren, ein Netzwerkelement, ein Computerprogramm und ein computerlesbares Speichermedium mit den Merkmalen der unabhängigen Patentansprüche vorgeschlagen. Vorteilhafte Ausgestaltungen sind Gegenstand der Unteransprüche sowie der nachfolgenden Beschreibung.

Das erfindungsgemäße Verfahren dient einem energieeffizienten Betrieb eines Netzwerkelements in einem Netzwerk. Das Netzwerkelement empfängt dabei in einem Bereitschaftsmodus eine Zieladresse für Nutzdaten einer Nachricht und stellt anhand der Zieladresse fest, dass die Nutzdaten nicht für das Netzwer kelement selbst bestimmt sind. Das Netzwerkelement geht daraufhin für eine vorbestimmte Dauer in einen Ruhemodus über; als "vorbestimmt" wird dabei eine Dauer bezeichnet, deren Länge dem Netzwerkelement bei seinem Übergang in den Ruhemodus bekannt ist. Wie weiter unten dargelegt wird, kann diese Dauer von weiteren Informationen in der Nachricht abhängen oder für das Netzwerk festgelegt sein.

Der Energieverbrauch des Netzwerkelements ist erfindungsgemäß im Ruhemodus niedriger als im Bereitschaftsmodus, beispielsweise weil (insbesondere komplexe) Funktionen des Netzwerkelements im Bereitschaftmodus ein- und im Ru hemodus abgeschaltet sind. So können z.B. im Ruhemodus Systemkomponenten des Netzwerkelements deaktiviert sein, die im Bereitschaftsmodus aktiv sind.

Nach Ablauf der vorbestimmten Dauer wechselt das Netzwerkelement vom Ruhemodus zurück in den Bereitschaftsmodus oder in einen Sendemodus.

Das erfindungsgemäße Verfahren bietet den Vorteil, dass das Netzwerkelement überflüssigen Energieverbrauch im Bereitschaftsmodus vermeidet. Es eignet sich dabei zum Einsatz in kollisionsfreien und in kollisionsbehafteten Systemen.

Anhand der Zieladresse einer Nachricht stellt das Netzwerkelement zunächst fest, dass es nicht der Adressat der Nachricht ist, diese also für ein anderes Netzwerkelement bestimmt ist. Während der Zeit, in der die Nachricht dem anderen Netzwerkelement übermittelt wird, ist der entsprechende Kanal belegt. Zur Erläuterung der verwendeten Begriffe sei darauf hingewiesen, dass insbesondere bei einem geswitchten Ethernet ein großes Netzwerk aus vielen verschiedenen physikalischen Verbindungen bzw. Kanälen bestehen kann. Das Senden einer einzigen Nachricht führt lediglich dazu, dass eine solche Verbindung bzw. ein solcher Kanal belegt ist, nicht aber das gesamte Netzwerk. Insbesondere braucht das (erste) Netzwerkelement in dieser Zeit, der die vorbestimmte Dauer entspricht, keine weitere Nachricht zu erwarten. Es bedeutet daher keine Einschränkung der Netzwerkfunktionalität, dass das Netzwerkelement seine Aktivität auf ein Minimum reduziert und so den Gesamtenergieverbrauch des Netzwerks senkt. Die Reduktion geschieht, indem das Netzwerkelement in den Ruhemodus übergeht, in dem es weniger Energie verbraucht als im Bereitschaftsmodus. Nach Ablauf der vorbestimmten Dauer ist die Nachricht an das andere Netzwerkelement übermittelt. Um wieder für neue Nachrichten empfangsbereit zu sein, geht das (erste) Netzwerkelement wieder in den Bereitschaftsmodus über. Je nach Implementierung kann es auch sinnvoll sein, die Dauer so zu wählen, dass das Netzwerkelement aufwacht, gerade bevor das Senden der Nachricht abgeschlossen wurde.

Die vorbestimmte Dauer kann dem Netzwerkelement auf verschiedene Weisen bekannt sein oder werden: In einer nicht erfindungsgemäßen Ausführungsform wird sie mit der Nachricht versandt, beispielsweise in einem oder mehreren Metadatenblock/ blöcken. Die vorbestimmte Dauer kann beispielsweise als Längenangabe der Nachricht ebenso wie die Zieladresse und eine Nachrichtenpräambel in einem Nachrichtenheader enthalten sein, den das Netzwerkelement empfängt. Sind mehrere Netzwerkelemente im Netzwerk enthalten, empfangen vorzugsweise alle Netzwerkelemente die Präambel, die Zieladresse und die Längenangabe. Der Nachrichtenheader kann weitere Metadaten, beispielsweise Kontrolldaten umfassen, die vom Netzwerkelement nicht mehr empfangen werden, nachdem es festgestellt hat, dass die Nachricht für mindestens ein anderes Netzwerkelement bestimmt ist. Auf diese Weise kann das Netzwerkelement für einen Empfang benötigte Systemkomponenten so früh deaktivieren wie möglich und damit Energie einsparen. Die weiteren Metadaten werden bevorzugtermaßen nur von dem- oder denjenigen Netzwerkelement/en empfangen, das bzw. die durch die Zieladresse im Nachrichtenheader adressiert ist/sind.

In einer erfindungsgemäßen Weise hingegen ermittelt das Netzwerkelement die vorbestimmte Dauer aus der Ziel- und einer Absenderadresse, die in einem oder mehreren Metadatenblock/blöcken in der Nachricht enthalten sind, beispielsweise in einem Nachrichtenheader. Das Netzwerkelement kann dazu Zugang zu einer Datenstruktur haben, in der festgelegt ist, welche vorbestimmte Dauer jeweils Paaren von Absender- und/oder Zieladressen von Nachrichten zuzuordnen ist. Die Datenstruktur kann beispielsweise im Netzwerkelement abgespeichert sein.

Auch in dieser Ausführungsform werden vorzugsweise weitere Informationen in der Nachricht, insbesondere im Nachrichtenheader nicht mehr vom Netzwerkelement empfangen, wenn es festgestellt hat, dass es nicht der Adressat der Nachricht ist.

Besonders bevorzugt sind Ausführungsformen, bei der die Zieladresse und die Nachrichtenlänge bzw. die Zieladresse und die Absenderadresse die ersten Teile (ggf. nach einer Präambel) der Nachricht sind, die vom Netzwerkelement empfangen werden; die genannten Informationen können beispielsweise am Anfang der Nachricht stehen. Auf diese Weise kann das Netzwerkelement frühzeitig in den Ruhemodus übergehen, wenn sich herausstellt, dass die Nachricht nicht für das Netzwerkelement bestimmt ist.

In einer weiteren, nicht erfindungsgemäßen Ausführungsform ist die vorbestimmte Dauer im Netzwerk festgelegt, beispielsweise als grundsätzliche oder minimale Dauer von Nachrichtenübermittlungen. In diesem Fall können im Netzwerk also periodisch in festen Zeitabständen Nachrichten versandt werden. Diese Ausführungsform erlaubt eine besonders einfache Erstellung der Nachrichten.

Ein erfindungsgemäßes Netzwerkelement ist insbesondere programmtechnisch dazu eingerichtet, ein erfindungsgemäßes Verfahren durchzuführen.

Auch die Implementierung des Verfahrens in Form von Software ist vorteilhaft, da dies besonders geringe Kosten verursacht, insbesondere wenn ein ausführendes Netzwerkelement noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Herunterladen eines Programms über Computernetze (Internet, Intranet usw.) ist möglich.

Weitere Vorteile und Ausgestaltungen der Erfindung ergeben sich aus der Beschreibung und den beiliegenden Zeichnungen.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im Folgenden unter Bezugnahme auf die Zeichnungen ausführlich beschrieben.

### Kurze Beschreibung der Zeichnungen

- Figur 1A: stellt schematisch ein Netzwerk (oder einen Teil eines Netzwerks) mit mehreren Netzwerkelementen dar
- Figur 1B: zeigt ein Zustandsdiagramm mit verschiedenen Betriebszuständen eines Netzwerkelements
- Figur 2: stellt eine Ausführungsform der vorliegenden Erfindung als Diagramm dar
- Figur 3: zeigt eine weitere Ausführungsform der vorliegenden Erfindung als Diagramm

### Ausführungsformen der Erfindung

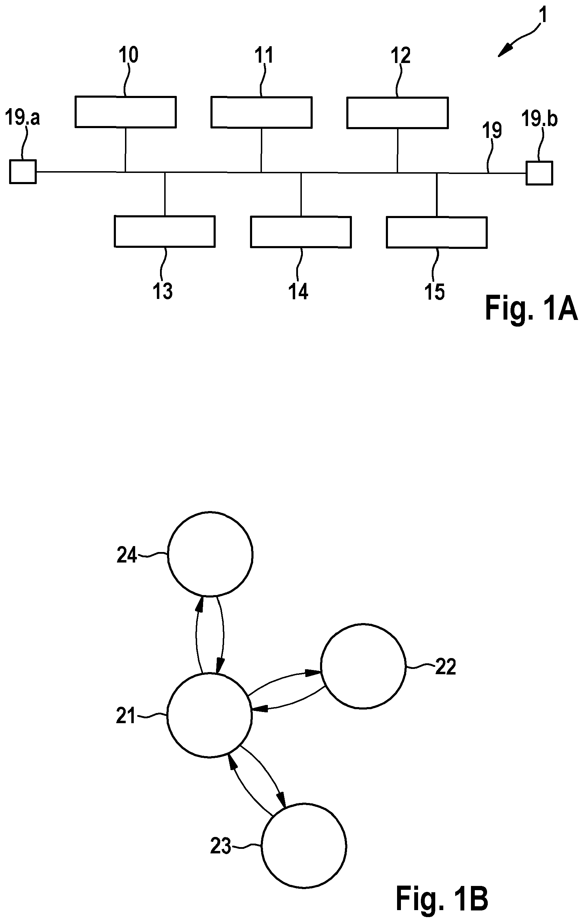

In Figur 1A ist exemplarisch ein Netzwerk 1 mit mehreren Netzwerkelementen 10, 11, 12, 13, 14 und 15 dargestellt. Die Netzwerkelemente können über ein gemeinsames Kommunikationsmedium 19 miteinander kommunizieren, das im dargestellten Beispiel ein linearer Bus mit entsprechenden Busabschlüssen 19a und 19b ist. Alternativ oder zusätzlich zu einem linearen Bus kann das Netzwerk beispielsweise einen drahtlosen Übertragungskanal oder einen ringförmigen Bus umfassen.

Figur 1B zeigt verschiedene Betriebszustände, die ein Netzwerkelement erfindungsgemäß einnehmen kann und in denen es jeweils unterschiedlichen Energieverbrauch haben kann: Dargestellt sind ein Bereitschaftsmodus 21, ein Ruhemodus 23 und ein Empfangsmodus 22. Ebenfalls dargestellt ist ein fakultativer Sendemodus 24. Alternativ kann das Netzwerkelement eingerichtet sein, im Bereitschaftsmodus Daten zu versenden.

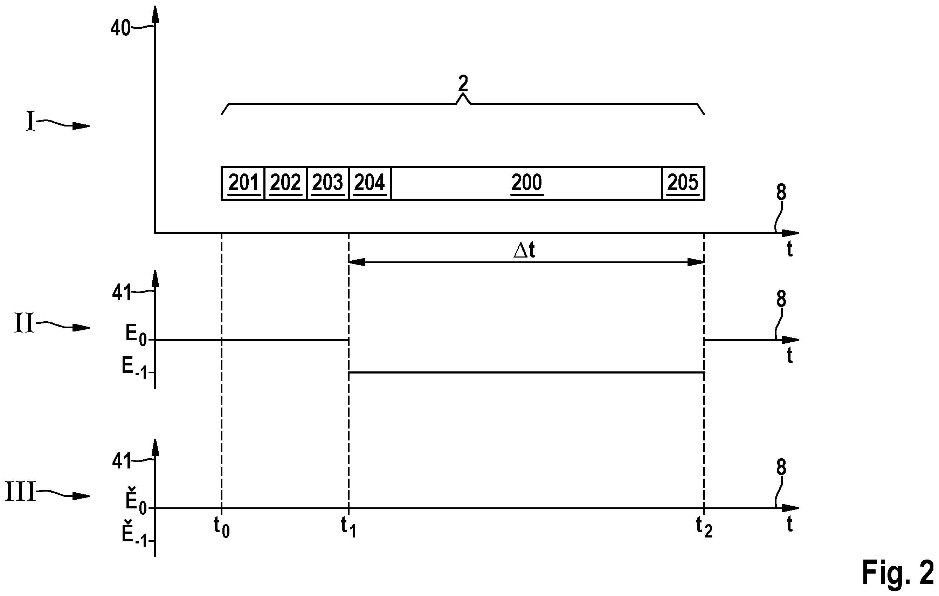

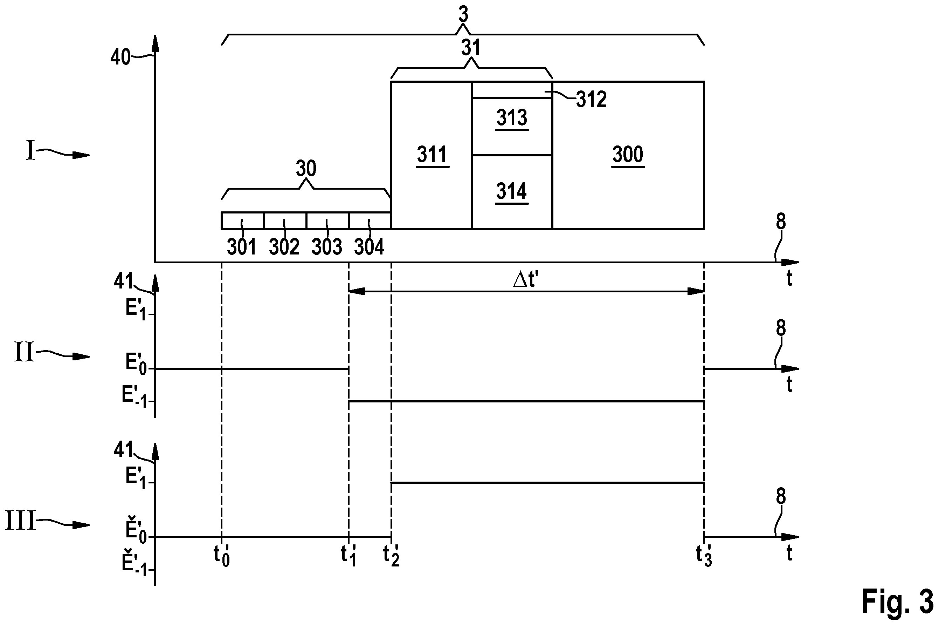

Ist das Netzwerkelement für den Empfang von Nachrichten mit Teilen unterschiedlicher Komplexität eingerichtet (siehe Figur 3), ist der Energieverbrauch im Bereitschaftsmodus 21 niedriger als im Empfangsmodus 22; andernfalls (siehe Figur 2) ist der Energieverbrauch des Netzwerkelements im Bereitschaftsmodus bereits relativ hoch. In diesem Fall kann das Netzwerkelement zudem eingerichtet sein, im Bereitschaftsmodus Nachrichten zu empfangen, so dass auf einen separaten Empfangsmodus 22 verzichtet werden kann.

Im Ruhemodus 23 ist der Energieverbrauch in beiden Fällen niedriger als im Bereitschaftsmodus. Der Übergang des Netzwerkelements in die verschiedenen Modi (Zustände) erfolgt wie oben und nachfolgend beschrieben. Prinzipiell ist zusätzlich oder alternativ zu den beschriebenen Übergängen auch ein Übergang vom Zustand Empfangen nach Senden, von Senden nach Empfangen bzw. von Ruhe nach Senden oder Empfangen bzw. umgekehrt denkbar.

Die in den Figuren 2 und 3 gezeigten Diagramme zu Ausführungsformen des erfindungsgemäßen Verfahrens umfassen je drei Teile I, II und III, die jeweils ein Koordinatensystem mit einer gemeinsamen (synchronen) Zeitachse 8 als Abszisse enthalten.

In Teil I beider Figuren ist schematisch eine Nachricht in das Koordinatensystem eingefügt, die zeitliche Zuordnung der Nachrichtenblöcke entspricht dabei der Chronologie, gemäß der die Blöcke von einem, mehreren oder allen Netzwerkelement(en) im Netzwerk empfangen wird.

Der Zeitachse 8 als Abszisse ist in Teil I der Figuren 2 und 3 eine erste Ordinate 40 zugeordnet. Diese markiert qualitativ den Signalverarbeitungsaufwand, den ein Netzwerkelement beim Empfang der jeweiligen Datenblöcke der Nachricht zu leisten hat.

In den Teilen II und III der in den Figuren 2 bzw. 3 dargestellten Diagramme ist durch die Ordinate 41 jeweils qualitativ der erfindungsgemäße Energieverbrauch mindestens eines ersten bzw. mindestens eines zweiten Netzwerkelements aufgetragen, und zwar in Bezug auf die Zeitachse und den damit verbundenen Empfang der Nachricht 2 bzw. 3. Teil II der Diagramme betrifft mindestens ein erstes Netzwerkelement, das nicht Adressat der in Teil I dargestellten Nachricht 2 bzw. 3 ist. Demgegenüber ist in Teil III der Diagramme der Energieverbrauch mindestens eines zweiten Netzwerkelements dargestellt, für das die Nachricht bestimmt ist.

In den in den Figuren 2 und 3 dargestellten Fällen verläuft der Empfang der einzelnen Blöcke der jeweiligen Nachricht für das mindestens eine erste Netzwerkelement (Teil II) und das mindestens eine zweite Netzwerkelement (Teil III) genau synchron, in der Realität können sich infolge von Übertragungsverzögerungen leichte Abweichungen zwischen erstem und zweitem Netzwerkelement ergeben.

In Teil I der Figur 2 ist eine Nachricht 2 schematisch dargestellt. Sie umfasst eine Präambel 201, eine Zieladresse 202 und eine Absenderadresse 203. Anhand der Ziel- und/oder der Absenderadresse kann ein empfangendes Netzwerkelement eine Dauer Δt bestimmen, die für die Übermittlung der Nachricht von der Absenderadresse zur Zieladresse erforderlich sein wird. Hierzu kann das Netzwerkelement beispielsweise auf eine Datenstruktur zugreifen, die zentral im Netzwerk oder lokal im Netzwerkelement gespeichert ist und in der Paaren von möglichen Absender- und Zieladressen von Nachrichten eine Übertragungsdauer zugeordnet ist. Wie beschrieben geht ein Netzwerkelement, das erkennt, dass es nicht der Adressat der Nachricht ist, erfindungsgemäß für die Dauer Δt in einen Ruhemodus über. Da die Dauer zum Zeitpunkt dieses Übergangs bereits bestimmt ist und somit feststeht, wird sie vorliegend auch als "vorbestimmte" Dauer bezeichnet.

Alternativ oder zusätzlich zur Absenderadresse 203 kann eine Nachricht eine spezifische Nachrichtenlänge enthalten, aus der sich die Dauer Δt ergibt. Eine weitere Alternativ ist, dass in einem Feld 203 der Inhalt der Nachricht codiert ist (analog zu beispielsweise einem CAN Message Identifier bei einer CAN-Nachricht). Mit dem Nachrichteninhalt ist wiederum eine feste Länge assoziiert.

Die Nachricht 2 enthält weiterhin Kontrolldaten 204, Nutzdaten 200 und eine Prüfsumme 205. Wie aus Teil I des Diagramms in Figur 2 ersichtlich ist, ist der Signalverarbeitungsaufwand eines empfangenden Netzwerkelements für alle Datenblöcke der Nachricht 2 gleich groß. Es sei darauf hingewiesen, dass die einzelnen Felder der Nachricht auch in einer anderen Reihenfolge angeordnet werden können.

Zum Zeitpunkt t₀ wird der erste Block 201 (die Präambel) der Nachricht 2 von einem, mehreren oder allen Netzwerkelement(en) im Netzwerk empfangen. Ein Netzwerk kann prinzipiell aus unterschiedlichen physikalischen Verbindungen bzw. Kanälen zusammengesetzt sein, so dass nicht alle Netzwerkelemente über die gleiche physikalischen Verbindung kommunizieren und folglich auch nicht alle Netzwerkelemente eine Information sehen, die über nur eine (oder mehrerer aber nicht alle) der physikalischen Verbindungen gesendet wird. Es folgt der Empfang der Zieladresse 202 und der Absenderadresse 203, der zum Zeitpunkt t₁ abgeschlossen ist. Zu diesem Zeitpunkt weiß das Netzwerkelement, ob es der Adressat der Nachricht 2 ist oder ob diese für mindestens ein anderes Netzwerkelement bestimmt ist, und kann sich wie nachfolgend beschrieben entsprechend darauf einstellen. Zum Zeitpunkt t₂ ist die Übermittlung der Nachricht im Netzwerk abgeschlossen.

Teil II der Figur 2 zeigt den Energieverbrauch mindestens eines ersten Netzwerkelements, das zum Zeitpunkt t₁ festgestellt hat, dass die Nachricht für mindestens ein anderes Netzwerkelement bestimmt ist, und das seinen Betriebszustand erfindungsgemäß an dieses Wissen anpasst: Das Netzwerkelement empfängt die ersten Blöcke 201, 202 und 203 bis zum Zeitpunkt t₁ in einem Bereitschaftsmodus mit relativ hohem Energieverbrauch E₀. Es sei darauf hingewiesen, dass prinzipiell das Netzwerkelement nach Empfang der Zieladresse (also Block 202) weiß, welches Netzwerkelement adressiert ist und nicht erst zum Zeitpunkt t₁. In diesem Fall ist auch ein gegenüber dem vorstehend Beschriebenen entsprechend früherer Wechsel in dem Ruhemodus möglich. Danach geht es für die vorbestimmte Dauer in einen Ruhemodus über, in dem der Energieverbrauch E₋₁ niedriger ist als E₀. Zum Zeitpunkt t₂ ist die vorbestimmte Dauer Δt ab dem Zeitpunkt t₁ abgelaufen. Das Ende von Δt muss nicht zwingendermaßen auf t₂ fallen. Aus Implementierungsgründen kann es insbesondere vorteilhaft sein, wenn Δt vor t₂ abläuft. Da das Netzwerk zu diesem Zeitpunkt nicht mehr mit der Nachricht belegt ist, sondern weitere Nachrichten in ihm versandt werden können, geht das mindestens eine erste Netzwerkelement wieder in den Bereitschaftsmodus über, um in diesem gegebenenfalls Nachrichten empfangen zu können. Alternativ könnte das mindestens eine erste Netzwerkelement zum Zeitpunkt t₂ in einen Sendemodus übergehen, um selbst eine oder mehrere Nachrichten zu verschicken.

In Teil III der Figur 2 ist der Energieverbrauch mindestens eines zweiten Netzwerkelements in Bezug auf den Empfang der Komponenten der Nachricht 2 in seinem zeitlichen Ablauf dargestellt. Zum Zeitpunkt t₁ hat das mindestens eine zweite Netzwerkelement die ersten Blöcke 201, 202 und 203 in seinem Bereitschaftsmodus empfangen und festgestellt, dass es der Adressat der Nachricht ist. In dem Diagramm ist dargestellt, dass das mindestens eine zweite Netzwerkelement in seinem Bereitschaftsmodus den Energieverbrauch E₀ hat; dieser kann der gleiche sein wie der Energieverbrauch E₀ des mindestens einen ersten Netzwerkelements in dessen Bereitschaftsmodus; alternativ kann der Energieverbrauch der verschiedenen Netzwerkelemente in ihrem jeweiligen Bereitschaftsmodus differieren, beispielsweise abhängig von der jeweiligen Ausgestaltung der Hard- und/oder Software eines jeden Netzwerkelements.

Das mindestens eine zweite Netzwerkelement empfängt auch die restlichen Teile 204, 205 und die Nutzdaten 200 der Nachricht 2 in seinem Bereitschaftsmodus, in dem es den Energieverbrauch 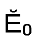 hat. Danach, zum Zeitpunkt t₂, ist das Netzwerk frei für weitere Nachrichten. Beispielsweise kann danach das mindestens eine zweite Netzwerkelement in Bezug auf eine weitere Nachricht mit weiteren Nutz- und Metadaten analog zum beschriebenen mindestens einen ersten Netzwerkelement agieren, also z.B. anhand einer weiteren Zieladresse und einer weiteren Absenderadresse oder einer weiteren Nachrichtenlänge feststellen, dass die weitere Nachricht nicht für das mindestens eine zweite Netzwerkelement bestimmt ist, und dann für eine vorbestimmte Dauer in einen Ruhemodus mit einem Energieverbrauch 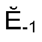 übergehen, der niedriger ist als der Energieverbrauch 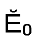 im Bereitschaftsmodus.

In Figur 3 sind analoge Diagramme I, II und III dargestellt, wobei die dort betrachtete Nachricht 2 Teile unterschiedlicher Komplexität aufweist, die unterschiedlichen Signalverarbeitungsaufwand erfordern.

Die Nachricht 3 weist einen ersten Nachrichtenheader 30 auf, der vier Metadatenblöcke, nämlich eine Präambel 301, eine Zieladresse 302, eine Nachrichtenlänge 303 und Kontrolldaten 304 umfasst. Darüber hinaus enthält die Nachricht 3 als weitere Metadatenblöcke ein Pilotsymbol 311, Kontrolldaten 312, Informationen 313 über die Zieladresse und Informationen 314 über eine Quelladresse; die Informationen 313 über die Zieladresse können dabei komplexere Daten enthalten als die Zieladresse 302 selbst, die einem Netzwerkelement nur dazu dient zu erkennen, ob die Nachricht für dieses oder für ein anderes Netzwerkelement bestimmt ist. Die weiteren Metadatenblöcke sind Teil eines zweiten Nachrichtenheaders 31, der eine höhere Komplexität aufweist als der erste Nachrichtenheader. Schließlich umfasst die Nachricht 3 die Nutzdaten 300. Hier können auch noch zusätzliche Trailer-Daten (beispielsweise Prüfsumme) enthalten sein.

Wie aus Teil I des Diagramms in Figur 3 hervorgeht, ist der Signalverarbeitungsaufwand beim ersten Nachrichtenheader 30 deutlich geringer als bei den nachfolgenden Komponenten 31 und 300 der Nachricht 3, beispielsweise weil zum Übertragen der Nachricht 3 für den ersten Nachrichtenheader 30 ein erster Übertragungsmodus und für den zweiten Nachrichtenheader 31 ebenso wie für die Nutzdaten 300 ein zweiter, komplexerer Übertragungsmodus verwendet wird.

Der zweite Übertragungsmodus kann zum Beispiel eine größere Anzahl an Verarbeitungsschritten erfordern als der erste. Beispielsweise können die Daten des ersten Nachrichtenheaders 30 als einfacher Bitstrom übertragen werden, in dem die einzelnen Datenbits direkt mit einem geeigneten analogen oder digitalen Übertragungsverfahren geringer Komplexität (z. B. Amplituden-, Frequenz- oder Phasenmodulation) und mit geringer Stufenanzahl übermittelt werden. Die Daten des zweiten Nachrichtenheaders 31 und die Nutzdaten 300 können demgegenüber mit einem höherwertigen digitalen Modulationsverfahren (z. B. unter Verwendung einer Quadraturamplitudenmodulation) übermittelt werden.

Alternativ oder zusätzlich kann die vom ersten Nachrichtenheader 30 genutzte Bandbreite im Frequenzspektrum deutlich geringer sein als die genutzte Bandbreite des zweiten Nachrichtenheaders 31 und/oder der Nutzdaten 300.

Die Hardware (wie bspw. die notwendigen Analog-Digital-Wandler) und die Auswertungsalgorithmen, die für den Empfang ersten Nachrichtenheader 30 erforderlich sind, können somit deutlich weniger komplex sein als die Hardware und Auswertungsalgorithmen, die für den Empfang des zweiten Nachrichtenheaders 31 und der Nutzdaten 300 einzusetzen sind.

Ein erster Zeitpunkt t₀' markiert in Figur 3 auf der Abszisse den Beginn des Empfangs der Nachricht 3 durch ein Netzwerkelement. Bis zum Zeitpunkt t₁' wird der erste Nachrichtenheader 30 mit der Präambel 301, der Zieladresse 302 und der Nachrichtenlänge 303 vom Netzwerkelement unter relativ niedrigem Signalverarbeitungsaufwand empfangen. Alternativ zur Nachrichtenlänge können auch andere Informationen (wie oben) zur Bestimmung der Nachrichtenlänge dienen bzw. verwendet werden. Ist die Nachricht nicht an das Netzwerkelement adressiert, verwirft das Netzwerkelement zum Zeitpunkt t₁ die Nachricht 3, beendet also seinen Empfang der Nachricht. Bestimmt hingegen die Zieladresse 303 das Netzwerkelement als Empfänger der Nachricht 3, empfängt das Netzwerkelement auch die Kontrolldaten 304 sowie ab dem Zeitpunkt t₂' und unter höherem Signalverarbeitungsaufwand den zweiten Nachrichtenheader 31 und die Nutzdaten 300. Zum Zeitpunkt t₃' ist der Empfang der Nachricht 3 durch das Netzwerkelement in diesem Fall abgeschlossen.

Wie in Teil II des Diagramms zu erkennen ist, beginnt das mindestens eine erste Netzwerkelement zum Zeitpunkt t₀' im Bereitschaftsmodus mit dem Energieverbrauch E₀' mit dem Empfangen der Nachricht 3. Aufgrund der geringen Komplexität des Nachrichtenheaders 30 und dem daraus resultierenden relativ geringen Signalverarbeitungsaufwand (siehe Teil I) kann dieser Energieverbrauch E₀' relativ niedrig sein, nämlich niedriger als ein Energieverbrauch E₁', der zum Empfang der komplexeren Teile 31 und 300 der Nachricht benötigt wird.

Bis zum Zeitpunkt t₁' empfängt das mindestens eine erste Netzwerkelement so die Metadatenblöcke mit der Präambel 301, der Zieladresse 302 und der Nachrichtenlänge 303 und stellt anhand der Zieladresse fest, dass die Nachricht für mindestens ein zweites Netzwerkelement bestimmt ist. Zum Zeitpunkt t₁' geht das mindestens eine erste Netzwerkelement für eine vorbestimmte Dauer Δt', die sich aus der Nachrichtenlänge 302 ergibt, in einen Ruhemodus über. In diesem Ruhemodus hat das mindestens eine erste Netzwerkelement einen sehr geringen Energieverbrauch E₋₁', der niedriger ist als sein Energieverbrauch E₀' im Bereitschaftsmodus.

In der Darstellung ist die vorbestimmte Dauer Δt' ab dem Zeitpunkt t₁' zum Zeitpunkt t₃' abgelaufen, und das Netzwerkelement geht wieder in den Bereitschaftsmodus mit dem Energieverbrauch E₀' über. Wie bereits oben angemerkt, muss Δt nicht notwendigerweise mit dem Ende der Nachricht korrelieren.

Auch die Ordinate des Teils III des Diagramms gibt qualitativ den Energieverbrauch eines Netzwerkelements an, in diesem Teil ist er für mindestens ein zweites Netzwerkelement in Beziehung zum zeitlichen Ablauf gesetzt, wobei die Nachricht 3 für dieses mindestens eine zweite Netzwerkelement bestimmt ist.

Wie das mindestens eine erste Netzwerkelement und synchron oder annähernd synchron zu diesem empfängt das mindestens eine zweite Netzwerkelement ab dem Zeitpunkt t₀' im Bereitschaftsmodus (mit niedrigem bis mittlerem Energieverbrauch 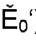 ) die Präambel 301, die Zieladresse 302 und die Nachrichtenlänge 303. Zum Zeitpunkt t₁' hat das zweite Netzwerkelement erkannt, dass es der Adressat der Nachricht ist. Für den Empfang der restlichen Metadaten niedriger Komplexität (im dargestellten Fall der Kontrolldaten 304) verbleibt das zweite Netzwerkelement im Bereitschaftsmodus mit dem Energieverbrauch E₀'. Danach geht es zum Zeitpunkt t₂' in einen Empfangsmodus über, in dem es die komplexeren Teile 31 und 300 der Nachricht bei relativ hohem Energieverbrauch 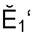 empfängt. Zum Zeitpunkt t₃' ist der Empfang der Nachricht 3 abgeschlossen, und das zweite Netzwerkelement geht wieder in den Bereitschaftsmodus über. Dieser Übergang kann vom zweiten Netzwerkelement nach einer Feststellung erfolgen, dass die Nachricht vollständig empfangen wurde. Alternativ kann der Zeitpunkt t₃' des Übergangs zurück in den Bereitschaftsmodus auch anhand der vorbestimmten Dauer Δt' (die sich z.B. aus der Information 303 über die Nachrichtenlänge ergibt) bereits zum Zeitpunkt t₁' vom zweiten Netzwerkelement bestimmt werden bzw. worden sein.

Zum Zeitpunkt t₃' sind also das mindestens eine erste und das mindestens eine zweite Netzwerkelement wieder im Bereitschaftsmodus, ebenso wie ggf. weitere im Netzwerk enthaltene Netzwerkelemente, deren Betriebsmodi zwischen den Zeitpunkten t₁' und t₃' analog zu denen des ersten bzw. des zweiten Netzwerkelements gesteuert werden, je nachdem, ob die Nachricht 3 für sie bestimmt ist oder nicht.

In Bezug auf eine weitere Nachricht können das mindestens eine erste und das mindestens eine zweite Netzwerkelement nach dem Zeitpunkt t₃' also analog agieren, wobei im Fall, dass die weitere Nachricht für das mindestens eine erste und nicht für das mindestens eine zweite Netzwerkelement bestimmt ist, die Übergänge in die verschiedenen Modi entsprechend anzupassen sind (das mindestens eine zweite Netzwerkelement also nach entsprechender Auswertung der Zieladresse und der Nachrichtenlänge für eine entsprechend vorbestimmte Dauer in den Ruhemodus übergeht und das mindestens eine erste Netzwerkelement in den Empfangsmodus).

Insgesamt ist der Energieverbrauch des Netzwerks durch den Übergang des mindestens einen ersten Netzwerkelements in den Ruhemodus mit sehr niedrigem Energieverbrauch E₋₁' reduziert gegenüber einem System, in dem Netzwerkelemente auch während der Übermittlung einer Nachricht an mindestens ein anderes Netzwerkelement im Bereitschaftsmodus verbleiben.

In einer alternativen Ausführungsform enthält der Nachrichtenheader 30 alternativ oder zusätzlich zur Nachrichtenlänge 303 einen Block mit der Absenderadresse der Nachricht. Aus dieser und der Zieladresse kann das mindestens eine erste und/oder das mindestens eine zweite Netzwerkelement dann die vorbestimmte Dauer und damit den Zeitpunkt t₃' für den Übergang in den Bereitschaftsmodus bestimmen.

## Patentansprüche

1. Verfahren für einen energieeffizienten Betrieb eines Netzwerkelements (10, 11, 12, 13, 14, 15) in einem Netzwerk (1), wobei das Verfahren die folgenden vom Netzwerkelement ausgeführten Schritte umfasst:
Empfangen, in einem Bereitschaftsmodus (21) des Netzwerkelements, einer ersten Zieladresse (202, 302) für Nutzdaten (200, 300) einer Nachricht (2, 3);
Feststellen, anhand der Zieladresse, dass die Nutzdaten nicht für das Netzwerkelement bestimmt sind;
Übergehen, für eine vorbestimmte Dauer (Δt, Δt'), in einen Ruhemodus (23); und
Übergehen, nach Ablauf der vorbestimmten Dauer, vom Ruhemodus in den Bereitschaftsmodus (21) oder in einen Sendemodus (24),
wobei der Energieverbrauch (E₀, E₀', E₋₁, E₋₁') des Netzwerkelements im Ruhemodus niedriger ist als im Bereitschaftsmodus,
**dadurch gekennzeichnet, dass** das Netzwerkelement die vorbestimmte Dauer (Δt, Δt') aus einer Absenderadresse (203) und der Zieladresse (202, 302) ermittelt, die in mindestens einem Metadatenblock wie beispielsweise einem Nachrichtenheader (30) der Nachricht enthalten sind und vom Netzwerkelement empfangen werden.

2. Verfahren gemäß Anspruch 1, wobei das Netzwerkelement nach Ablauf der vorbestimmten Dauer wieder in den Bereitschaftsmodus (21) übergeht und danach in diesem eine weitere Zieladresse (202, 302) für weitere Nutzdaten (200, 300) einer weiteren Nachricht (2, 3) empfängt, anhand der weiteren Zieladresse feststellt, dass die weiteren Nutzdaten (200, 300) für das Netzwerkelement bestimmt sind, und die weiteren Nutzdaten im Bereitschaftsmodus (21) oder in einem Empfangsmodus (22) mit höherem Energieverbrauch ( 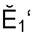 ) als im Bereitschaftsmodus empfängt.

3. Verfahren zur Koordination einer Kommunikation in einem Netzwerk (1), wobei das Netzwerk mindestens ein erstes und mindestens ein zweites Netzwerkelement (10, 11, 12, 13, 14, 15) umfasst,
wobei das mindestens eine erste Netzwerkelement ein Verfahren gemäß einem der Ansprüche 1 bis 2 und in Bezug auf eine Nachricht (2, 3) mit einer Zieladresse (202, 302) für Nutzdaten (200, 300) ausführt, und wobei das mindestens eine zweite Netzwerkelement in Bezug auf dieselbe Nachricht (2, 3) folgende Schritte ausführt:
Empfangen, in einem Bereitschaftsmodus (21) des mindestens einen zweiten Netzwerkelements, der Zieladresse (202, 302) für die Nutzdaten (200, 300); und
Feststellen, anhand der Zieladresse, dass die Nutzdaten (200, 300) für das mindestens eine zweite Netzwerkelement bestimmt sind.

4. Verfahren gemäß Anspruch 3, wobei das mindestens eine zweite Netzwerkelement die Nutzdaten (200, 300) in seinem Bereitschaftsmodus (21) empfängt.

5. Verfahren gemäß Anspruch 3, wobei das mindestens eine zweite Netzwerkelement zudem die folgenden Schritte ausführt:
Übergehen in einen Empfangsmodus (22);
Empfangen der Nutzdaten im Empfangsmodus; und
Übergehen, nach Empfangen der Nutzdaten, vom Empfangsmodus in den Bereitschaftsmodus oder in einen Sendemodus des mindestens einen zweiten Netzwerkelements,
wobei der Energieverbrauch ( 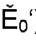 , 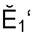 ) des mindestens einen zweiten Netzwerkelements im Bereitschaftsmodus vorzugsweise niedriger ist als im Empfangsmodus.

6. Verfahren gemäß Anspruch 5, wobei das mindestens eine erste Netzwerkelement ein Verfahren gemäß Anspruch 1 ausführt, wobei das mindestens eine zweite Netzwerkelement den mindestens einen Metadatenblock, beispielsweise den Nachrichtenheader (30), vollständig empfängt, ehe es in den Empfangsmodus übergeht, und wobei das mindestens eine erste Netzwerkelement den mindestens einen Metadatenblock, beispielsweise den Nachrichtenheader, vorzugsweise nur teilweise empfängt.

7. Verfahren gemäß Anspruch 6, wobei das mindestens eine zweite Netzwerkelement zudem mindestens einen weiteren Metadatenblock (311, 312, 313, 314) im Empfangsmodus empfängt.

8. Verfahren gemäß einem der Ansprüche 5 bis 7, wobei das mindestens eine zweite Netzwerkelement
in seinem Bereitschaftsmodus (21) analoge Verarbeitungsverfahren und in
seinem Empfangsmodus (22) digitale Verarbeitungsverfahren, und/oder in seinem Bereitschaftsmodus (21) ein erstes Modulationsverfahren und in
seinem Empfangsmodus (22) ein zweites Modulationsverfahren verwendet.

9. Verfahren gemäß einem der Ansprüche 5 bis 8, wobei das Übergehen des ersten Netzwerkelements vom Ruhemodus (23) in seinen Bereitschaftsmodus oder Sendemodus gleichzeitig mit dem Übergehen des zweiten Netzwerkelements in dessen Bereitschaftsmodus oder Sendemodus erfolgt.

10. Netzwerkelement (10, 11, 12, 13, 14, 15) das dazu eingerichtet ist, ein Verfahren gemäß einem der Ansprüche 1 bis 2 auszuführen, wenn es in ein Netzwerk (1) eingebunden ist,.

11. Netzwerk (1) mit mindestens einem ersten und mindestens einem zweiten Netzwerkelement (10, 11, 12, 13, 14, 15), die dazu eingerichtet sind, ein Verfahren gemäß einem der Ansprüche 1 bis 9 auszuführen.

12. Computerprogramm mit Programmcodemitteln, die ein Netzwerkelement (10, 11, 12, 13, 14, 15) in einem Netzwerk (1) veranlassen, ein Verfahren nach einem der Ansprüche 1 bis 2 oder ein erstes und/oder ein zweites Netzwerkelement (10, 11, 12, 13, 14, 15) in einem Netzwerk (1) veranlassen, ein Verfahren nach einem der Ansprüche 3 bis 9 durchzuführen, wenn sie auf dem jeweiligen Netzwerkelement ausgeführt werden.

13. Maschinenlesbares Speichermedium mit einem darauf gespeicherten Computerprogramm nach Anspruch 12.

## Claims

1. Method for energy-efficient operation of a network element (10, 11, 12, 13, 14, 15) in a network (1), wherein the method comprises the following steps which are carried out by the network element:
receiving a first destination address (202, 302) for useful data (200, 300) in a message (2, 3) in a standby mode (21) of the network element;
determining, on the basis of the destination address, that the useful data are not intended for the network element;
changing to an idle mode (23) for a predetermined period (Δt, Δt'); and
changing from the idle mode to the standby mode (21) or to a transmission mode (24) after expiry of the predetermined period,
wherein the energy consumption (E₀, E₀', E₋₁, E-₁') of the network element is lower in the idle mode than in the standby mode,
**characterized in that** the network element determines the predetermined period (Δt, Δt') from a sender address (203) and the destination address (202, 302) which are contained in at least one meta data block, for example a message header (30) of the message, and are received by the network element.

2. Method according to Claim 1, wherein the network element changes to the standby mode (21) again after expiry of the predetermined period and then receives a further destination address (202, 302) for further useful data (200, 300) in a further message (2, 3) in said mode, determines, on the basis of the further destination address, that the further useful data (200, 300) are intended for the network element, and receives the further useful data in the standby mode (21) or in a reception mode (22) with a higher energy consumption (*Ě*₁') than in the standby mode.

3. Method for coordinating communication in a network (1), wherein the network comprises at least one first network element and at least one second network element (10, 11, 12, 13, 14, 15),
wherein the at least one first network element carries out a method according to one of Claims 1 to 2 and with respect to a message (2, 3) having a destination address (202, 302) for useful data (200, 300), and wherein the at least one second network element carries out the following steps with respect to the same message (2, 3):
receiving the destination address (202, 302) for the useful data (200, 300) in a standby mode (21) of the at least one second network element; and
determining, on the basis of the destination address, that the useful data (200, 300) are intended for the at least one second network element.

4. Method according to Claim 3, wherein the at least one second network element receives the useful data (200, 300) in its standby mode (21).

5. Method according to Claim 3, wherein the at least one second network element also carries out the following steps:
changing to a reception mode (22);
receiving the useful data in the reception mode; and
changing from the reception mode to the standby mode or to a transmission mode of the at least one second network element after receiving the useful data,
wherein the energy consumption (*Ě*₀', *Ě*₁') of the at least one second network element is preferably lower in the standby mode than in the reception mode.

6. Method according to Claim 5, wherein the at least one first network element carries out a method according to Claim 1, wherein the at least one second network element completely receives the at least one meta data block, for example the message header (30), before it changes to the reception mode, and wherein the at least one first network element preferably only partially receives the at least one meta data block, for example the message header.

7. Method according to Claim 6, wherein the at least one second network element also receives at least one further meta data block (311, 312, 313, 314) in the reception mode.

8. Method according to one of Claims 5 to 7, wherein the at least one second network element uses analogue processing methods in its standby mode (21) and digital processing methods in its reception mode (22), and/or
uses a first modulation method in its standby mode (21) and a second modulation method in its reception mode (22).

9. Method according to one of Claims 5 to 8, wherein the first network element changes from the idle mode (23) to its standby mode or transmission mode at the same time as the second network element changes to its standby mode or transmission mode.

10. Network element (10, 11, 12, 13, 14, 15) which is set up to carry out a method according to one of Claims 1 to 2 when it is incorporated in a network (1).

11. Network (1) having at least one first network element and at least one second network element (10, 11, 12, 13, 14, 15) which are set up to carry out a method according to one of Claims 1 to 9.

12. Computer program having program code means which cause a network element (10, 11, 12, 13, 14, 15) in a network (1) to carry out a method according to one of Claims 1 to 2 or cause a first network element and/or a second network element (10, 11, 12, 13, 14, 15) in a network (1) to carry out a method according to one of Claims 3 to 9 when they are executed on the respective network element.

13. Machine-readable storage medium having a computer program according to Claim 12 stored thereon.

## Revendications

1. Procédé pour le fonctionnement efficace au niveau énergétique d'un élément de réseau (10, 11, 12, 13, 14, 15) dans un réseau (1), le procédé comprenant les étapes suivantes réalisées par l'élément de réseau :
réception, dans un mode de disponibilité (21) de l'élément de réseau, d'une première adresse de destination (202, 302) pour des données d'utilisation (200, 300) d'un message (2, 3) ;
constatation, sur la base de l'adresse de destination, que les données d'utilisation ne sont pas destinées à l'élément de réseau ;
transition, pour une durée prédéfinie (Δt, Δt'), dans un mode de repos (23) ; et
transition, après écoulement de la durée prédéfinie, du mode de repos vers le mode de disponibilité (21) ou un mode d'envoi (24),
la consommation énergétique (E₀, E₀', E₋₁, E₋₁') de l'élément de réseau en mode de repos étant inférieure à celle en mode de disponibilité,
**caractérisé en ce que** l'élément de réseau détermine la durée prédéfinie (Δt, Δt') à partir d'une adresse d'expéditeur (203) et de l'adresse de destination (202, 302) qui sont contenues dans au moins un bloc de métadonnées comme par exemple un en-tête de message (30) du message et reçues par l'élément de réseau.

2. Procédé selon la revendication 1, dans lequel l'élément de réseau, après écoulement de la durée prédéfinie, repasse en mode de disponibilité (21) et reçoit ensuite dans celui-ci une autre adresse de destination (202, 302) pour d'autres données d'utilisation (200, 300) d'un autre message (2, 3), constate, sur la base de l'autre adresse de destination, que les autres données d'utilisation (200, 300) sont destinées à l'élément de réseau, et reçoit les autres données d'utilisation en mode de disponibilité (21) ou dans un mode de réception (22) avec une consommation énergétique plus élevée ( 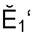 ) qu'en mode de disponibilité.

3. Procédé de coordination d'une communication dans un réseau (1), le réseau comprenant au moins un premier et au moins un second élément de réseau (10, 11, 12, 13, 14, 15),
l'au moins un premier élément de réseau réalisant un procédé selon une des revendications 1 et 2 et en référence à un message (2, 3) ayant une adresse de destination (202, 302) pour des données d'utilisation (200, 300), et l'au moins un second élément de réseau réalisant les étapes suivantes en référence à ce même message (2, 3) :
réception, dans un mode de disponibilité (21), de l'au moins un second élément de réseau, de l'adresse de destination (202, 302) pour les données d'utilisation (200, 300) ; et
constatation, sur la base de l'adresse de destination, que les données d'utilisation (200, 300) sont destinées à l'au moins un second élément de réseau.

4. Procédé selon la revendication 3, dans lequel l'au moins un second élément de réseau reçoit les données d'utilisation (200, 300) dans son mode de disponibilité (21).

5. Procédé selon la revendication 3, dans lequel l'au moins un second élément de réseau réalise en outre les étapes suivantes :
transition dans un mode de réception (22) ;
réception des données d'utilisation en mode de réception ; et
transition, après réception des données d'utilisation, du mode de réception vers le mode de disponibilité ou vers un mode d'envoi de l'au moins un second élément de réseau, la consommation énergétique ( 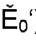 , 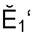 ) de l'au moins un second élément de réseau en mode de disponibilité étant de préférence inférieure à celle en mode de réception.

6. Procédé selon la revendication 5, dans lequel l'au moins un premier élément de réseau réalise un procédé selon la revendication 1, l'au moins un second élément de réseau recevant intégralement l'au moins un bloc de métadonnées, par exemple l'en-tête de message (30) plutôt que de passer en mode de réception, et l'au moins un premier élément de réseau recevant de préférence seulement partiellement l'au moins un bloc de métadonnées, par exemple l'en-tête de message.

7. Procédé selon la revendication 6, dans lequel l'au moins un second élément de réseau reçoit en outre au moins un autre bloc de métadonnées (311, 312, 313, 314) en mode de réception.

8. Procédé selon une des revendications 5 à 7, dans lequel l'au moins un second élément de réseau,
utilise, dans son mode de disponibilité (21), des procédés de traitement analogiques et, dans son mode de réception (22), des procédés de traitement numériques, et/ou,
dans son mode de disponibilité (21), un premier procédé de modulation et, dans son mode de réception (22), un second procédé de modulation.

9. Procédé selon une des revendications 5 à 8, dans lequel la transition du premier élément de réseau du mode de repos (23) vers son mode de disponibilité ou son mode d'envoi a lieu simultanément à la transition du second élément de réseau dans son mode de disponibilité ou son mode d'envoi.

10. Élément de réseau (10, 11, 12, 13, 14, 15) qui est conçu pour réaliser un procédé selon une des revendications 1 et 2 lorsqu'il est intégré dans un réseau (1).

11. Réseau (1) comportant au moins un premier et au moins un second élément de réseau (10, 11, 12, 13, 14, 15) qui sont conçus pour réaliser un procédé selon une des revendications 1 à 9.

12. Programme informatique doté de moyens de codage de programme qui amènent un élément de réseau (10, 11, 12, 13, 14, 15) dans un réseau (1), à réaliser un procédé selon une des revendications 1 et 2 ou un premier et/ou un second élément de réseau (10, 11, 12, 13, 14, 15) dans un réseau (1), à réaliser un procédé selon une des revendications 3 à 9 lorsqu'ils sont exécutés sur l'élément de réseau respectif.

13. Support de mémoire lisible par machine sur lequel est sauvegardé un programme informatique selon la revendication 12.
